# EUROPEAN PATENT APPLICATION

(11) **EP 3 498 089 A1**
(43) Date of publication of application: **19.06.2019**
(21) Application number: 18211503.0
(22) Date of filing: 11.12.2018
(51) Int. Cl.: A01G 31/02, A01G 31/00

(54) **SYSTEM FOR THE CULTIVATION, IN PARTICULAR HYDROPONIC, OF PLANTS, FLOWERS AND THE LIKE**

(30) Priority: 12.12.2017 IT 201700142837
(71) Applicant: Ceruti, Damiano, 28024 Gozzano (IT)
(72) Inventor: Ceruti, Damiano, 28024 Gozzano (IT)
(74) Representative: Torti, Carlo Maria Emilio

(57) **Abstract**

The present invention relates to a particularly efficient system for irrigating plants in pots without the use of soil or other aggregates for supporting the plants. In particular, the system of the present invention is provided with a container for the nutrient substance, wherein recesses are formed on the upper part of the container adapted to house the plants to be irrigated and provided with holes so that the roots of the plants remain inside the container, in continuous contact with the nutrient solution which feeds the plants.

## Description

### Technical field

The present invention relates to the cultivation of plants, e.g. of horticultural and/or ornamental herbaceous plants, flowers and the like. In particular, the present invention relates to the hydroponic cultivation of plants and/or flowers of the aforesaid type. In detail, the present invention relates to an innovative system for the "soil-free" (in particular "off-field") cultivation of plants and/or flowers of the aforesaid type. In more detail, the present invention relates to a system adapted to allow a facilitated management of the hydroponic cultivation of plants or flowers substantially during the entire cultivation cycle.

### Prior art

Methods and systems for the aeroponic and hydroponic cultivation of herbaceous plants, in particular of vegetable plants (e.g. tomatoes), but also of ornamental plants, flowers and the like, are known in the prior art. Said methods and related systems are mostly used for "soil-free" and/or "off-field" cultivation, wherein soil-free and/or off-field cultivation has to be understood as meaning cultivation in environments other than the open field, e.g. in greenhouses and/or in similar protected environments.

Said methods and systems are characterized by a minimum or even no use of fertile substrates, such as earth and/or potting soil, and envisage, on the contrary, the use of containers (e.g. trays or pots), adapted to contain a liquid, nutrient solution (substantially based on water and fertilizers) which is delivered to the root system of the plants (either periodically or permanently).

For example, in the "ebb and flow" system, the roots of the plants are flooded with programmed flows of nutrient and/or fertilizing solution, wherein the roots of the plants are arranged in a tray-shaped support (closed on five sides and open on the upper side through which the plants grow), and wherein the tray-shaped support contains a non-fertile, or rather inert, layer, usually based on gravel, expanded clay, perlite, and/or vermiculite and/or the like and/or equivalent inert materials. In particular, the nutrient solution is contained in a tank and, according to predetermined cycles, is pumped into the tray-shaped support and made to flow out from the tray-shaped support itself (and possibly recovered in the tank), whereby the roots of the plants, branching into the substrate, are alternatively submerged (at least in part and to an extent depending on the maximum level of solution in the tray-shaped support) by the solution, and exposed to air (in this case, to an extent depending on the minimum level of the solution in the tray-shaped support. This method of cultivation is particularly appreciated because it guarantees an excellent oxygenation of the root system, avoiding or at least reducing the risks of root rot, fungal diseases and the like.

However, such system has the disadvantage that at least some types of inert substrates, e.g. such as gravel, by being inevitably moved by the streams of solution, can create several drawbacks, such as interruptions of the flow, obstruction of pipes, drains, filters etc., and therefore also faults (e.g. to the pump or to the timer which actuates such pump), and consequently put out of order the system or trays served by the obstructed or damaged components, etc. In that case, the risk arises that the roots of the plants can dry out quickly.

Another hydroponic cultivation method is one in which the plants are kept suspended on the tray-shaped support with the roots immersed more or less permanently in the solution contained in the tray-shaped support itself. In this case, inert material is practically not used in the tray-shaped support and the solution is pumped into the tray and flows out of it in substantially continuous manner. Furthermore, considering the substantially permanent immersion of the roots in the solution, air vents and/or oxygenators are used to introduce air and/or oxygen, respectively, into the solution itself.

Said methods and related systems are particularly appreciated for large-scale greenhouse crops because the nearly continuous flow of solution allows the use of the large-size tray-shaped supports, e.g. several tens of meters long.

However, even said methods and related systems are not immune from disadvantages and/or drawbacks. A first disadvantage or drawback is related to the fact that it is necessary to provide a supporting structure to support the vegetative growth above the root system and therefore allow a uniform development of the plants themselves, whereby preventing, in particular, the plants themselves from bending downwards.

Drawbacks are therefore apparent in terms of costs for the provision and maintenance of the supporting structure, especially in consideration of the fact that the structure must be adapted to the type of plants and then possibly substituted if the tray-shaped support is intended for the cultivation of different plants and/or of plants of different size.

A further widely used cultivation method includes planting plants in pots (substantially similar, by shape and size, to those used in conventional gardening), previously (at least partially) filled with inert material, such as expanded clay or similar materials, wherein a substantially constant level of fertilizing solution is maintained in the pot by means of automated solutions, such as pumps, level sensors etc. (but also, more simply, by manual top-ups).

These solutions, particularly appreciated for small-scale crops (vegetable gardens and/or domestic gardens), have the disadvantage of requiring an individual management of each pot.

### Summary of the present invention

From the above, the need to overcome the problems and/or drawbacks affecting the cultivation methods and systems according to the prior art is apparent.

Therefore, it is an object of the present invention to provide a cultivation system which allows overcoming or at least reducing the drawbacks affecting the systems according to the prior art.

In particular, it is an object of the present invention to suggest and provide a system which allows the efficient hydroponic cultivation (and therefore off-field and/or soil-free) of plants, e.g. vegetables and/or flowers and/or the like, practically without the use of fertile substrates, such as earth and/or potting soil, and effectively using a fertilizing solution instead.

It is a further object of the present invention to provide a system which combines the advantages of the cultivation systems in pots and tray-shaped supports, overcoming or at least reducing the related drawbacks and/or problems.

Consequently, in this context, the present invention relates to a system according to claim 1.

The present invention arises from the general consideration according to which the advantages of cultivation in pots and trays can be combined using a tubular container as a tray or support (adapted to contain a predefined amount of fertilizing solution), but which at the same time is configured so as to be able to arrange a plurality of pots so that the root system of one or more plants in every single pot is at least partially immersed (either continuously or intermittently, according to requirements and/or circumstances) in said fertilizing solution.

In this manner, the container performs at the same time both the function of supporting the plants and of containing the fertilizing solution (as in the case of the trays of known type, but without the need to resort to supporting structures for the plants).

The problem related to the need to provide two separate structures, one for supporting the plants to keep them raised from the ground and the other for containing the nutrient and/or fertilizing solution, as in some irrigation systems known in the art, is therefore avoided.

Furthermore, such system can achieve the benefits of DWC (Deep Water Cultures) technology because the roots of the plants can be immersed (either completely or partially and either continuously or intermittently) in the fertilizing solution inside the container, thus ensuring the benefits of a cultivation and/or irrigation system free from soil or other supporting aggregates for the plants.

The cultivation and/or irrigation system according to the present invention also allows a more effective and simplified management with respect to the irrigation systems of the prior art in which a series of pots are present, each filled with clay or similar inert substrate, and hydraulically connected (for the distribution of fertilizing solution). Indeed, the operations for accommodating (planting) the plants and the operations (and respective system) for distributing the fertilizing solution are both simplified.

The expression "fertilizing and/or nutrient solution", in the context of the present invention, has to be understood as meaning an aqueous solution, in which fertilizing and/or nutrients substances for plants, such as for example liquid and/or solid fertilizers of mineral and/or natural origin, are dispersed (if liquid) and/or dissolved (if solid).

According to an embodiment a tank defines a support cradle on which said tubular container is positioned to rest.

According to an embodiment, said resting cradle comprises two opposite supporting fins, wherein the mutual minimum distance between said opposite supporting fins is smaller than the maximum crosswise dimension of said tubular container.

According to an embodiment, said tubular container extends between a first end portion and a second end portion opposite to said first end portion, wherein said tank is shaped so that said tubular container is arranged at least slightly inclined with respect to a horizontal reference surface sloping towards either said first end portion or said second end portion.

According to an embodiment, said system further comprises draining means for draining said nutrient solution from said container.

According to an embodiment, said draining means comprise reintroduction means for reintroducing into said tank said nutritive solution drained from said tubular container by means of said draining means.

According to an embodiment, a plurality of openings or seats is obtained in the external sleeve of said container, arranged in succession along a direction substantially parallel to the longitudinal development direction of said tubular container.

According to an embodiment, said container is substantially cylindrical with substantially circular cross section.

According to an embodiment, the development of said container is substantially straight.

According to an embodiment, said introduction means comprise pumping means and at least one delivery pipe for pumping said fertilizing solution from said tank into said container by means of said first delivery pipe.

According to an embodiment, said system further comprises a timer for programming the pumping cycles of said pumping means.

According to an embodiment, said system further comprise an air pump for introducing air into said container so as to allow the aeration of said fertilizing solution inside said container.

According to an embodiment, said container is further provided with a device for adjusting the level of nutrient solution inside said container.

According to an embodiment, said draining means comprise an overflow device adapted to define the maximum level of said nutrient solution inside said container, wherein said overflow device is positioned at the end portion between said first end portion and second end portion closest to said horizontal reference surface.

According to an embodiment, said container is further provided with an emptying device of the container, wherein said emptying device is positioned at the end portion between said first end portion and said second end portion closest to said horizontal reference surface.

According to an embodiment, said emptying device comprises second reintroduction means for reintroducing into said tank the nutritive solution let out from said container through said emptying device.

According to an embodiment, said container is provided on its upper part with a plurality of said recesses, distanced apart from one another by a constant pitch.

According to an embodiment, the mutual distance between said recesses varies according to the size of the recesses themselves and of the pots intended to be housed therein, the distance between larger adjacent recesses intended to accommodate larger pots being greater than the distance between smaller adjacent notches or recesses intended to accommodate smaller pots.

In this manner, it is possible to position the plants of the same size, each in a corresponding recess or notch, whereby obtaining an alignment of a same set of plants on the upper part of a single container.

According to an embodiment, said container is arranged in substantially horizontal manner with respect to the ground or to a surface on which the container rests.

In this manner, the horizontal development of the container allows a more efficient management of the irrigation system and a balancing of the nutrient solution.

According to an embodiment, said container is substantially cylindrical or has a polygonal cross section.

According to an embodiment, said container is made of transparent material, such as neoprene or PVC, for example.

In this manner, it is possible to see inside the container itself.

According to an embodiment, the nutrient solution is drained from the tubular container and/or reintroduced into the tank by gravity.

According to an embodiment, said cultivation and/or irrigation system also comprises a water pump, positioned inside said tank or in communication with it, to allow the passage (in particular, the pumping) of the nutrient solution from said tank to said container.

In this manner, the water pump allows filling the container with the nutrient solution in a continuous and/or intermittent cycle, according to the requirements and/or circumstances.

According to an embodiment, said cultivation and/or irrigation system further comprises a timer for adjusting the operation of said water pump.

In this manner, the timer allows filling the container with programmed waves of the nutrient solution. The timer, for example, can be set to adjust the activation of the pump several times a day, according to the size and type of plants, temperature and humidity.

According to an embodiment, said cultivation and/or irrigation system further comprises an air pump to allow the introduction of air into said container so as to allow the aeration of the solution, and so the oxygenation of the roots.

According to an embodiment, said air pump is positioned outside said container, at a portion of its external surface.

According to an embodiment, said air pump is connected to the inside of said container by means of an air pipe which passes through an appropriate hole passing through the surface of the container itself.

In this manner, the oxygen necessary for the growth of the plants is introduced into the container.

According to an embodiment, said container is further provided with a device for adjusting the level of nutrient solution inside said container. For example, said device to adjust the level of nutrient solution is a valve or a barrier.

According to an embodiment, said device to adjust the level of nutrient solution in said container is positioned at a height of container substantially near the highest point of the container above the lower part of the roots of plants.

In this manner, it is possible to substantially fill the container with the nutrient solution so that the plant roots remain immersed in the nutrient solution.

According to an embodiment, said level is adjusted by opening/closing said regulating device.

In this manner, as long as said level adjustment device is closed, the level of the nutrient solution inside the container increases under the action of said water pump or remains constant until a new activation of the water pump. Conversely, following the opening of said adjusting device, the level of the nutrient solution inside the container drops. Indeed, the part of the nutrient solution present in the upper part of the container will pass through said adjustment device located substantially adjacent to the roots of the plants.

According to an embodiment, said cultivation and/or irrigation system comprises at least a first draining pipe, which allows the nutrient solution let out from the container to be reintroduced into the tank as a result of the opening of said level adjustment device of the nutrient solution inside said container.

According to an embodiment, said container is further provided with a container emptying device. For example, said emptying device is a plug, a valve or a barrier.

According to an embodiment, said emptying device is positioned at a height substantially just above the bottom surface of the container itself.

In this manner, following the opening of said emptying device, the part of nutrient solution present in the lower part of the container will pass through it.

According to an embodiment, said irrigation system comprises a second draining pipe for reintroducing nutrient solution into the tank as a result of the opening of said emptying device.

Further possible embodiments of the present invention are specified in the claims.

### Brief description of the figures

The present invention is clarified below in greater detail by means of the detailed description of exemplary and not limiting embodiments thereof as depicted in the accompanying drawings, wherein:
- Figure 1 shows a partial section side view of an embodiment of the system according to the present invention;
- Figure 2 shows a partial section front view of the system according to an embodiment of the present invention.

### Detailed description of the present invention

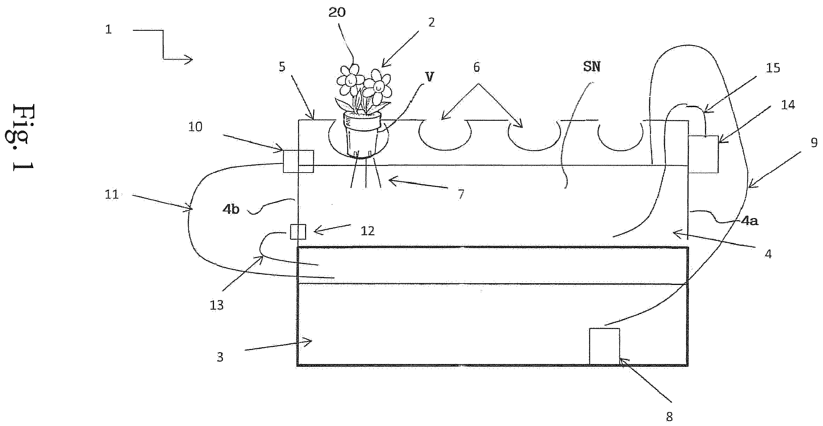

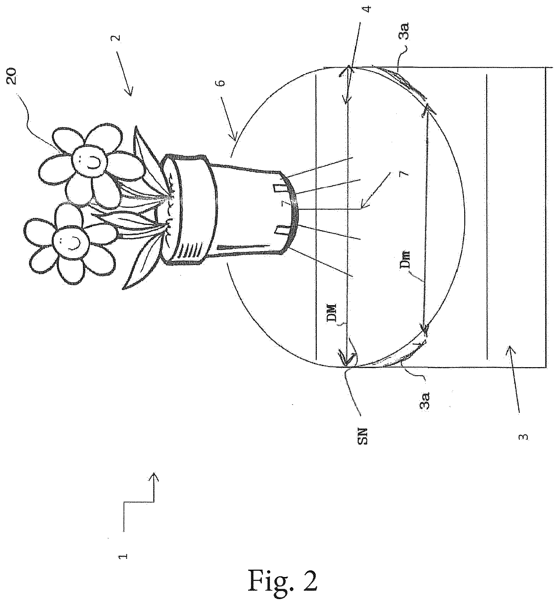

An embodiment of the cultivation system according to the present invention is described below with reference to Figures 1 and 2.

Figure 1 shows a system 1 for the cultivation of plants and/or flowers 2 (for example, but not exclusively, horticultural, ornamental herbaceous plants and the like) which comprises a tank 3 adapted to contain a fertilizing and/or nutrient solution SN for the plants 2; a container 4 is positioned over the tank 3, which container is substantially tubular and at least partially closed at least at one of its opposite ends 4a (front or delivery end) and 4b (rear or draining end), wherein front and rear ends respectively mean the ends upstream and downstream with respect to the direction of flow of the fertilizing solution (from right to left with respect to figure 1, see description below), arranged slightly slanted with respect to the ground or soil, so as to allow the outflow by gravity of the solution from the front end 4a towards the rear end 4b.

The at least partial closing of the container 4 allows adjusting the level of the solution inside the container 4; for example, a partition arranged at the draining end 4b allows the draining of the solution by flowing over the partition itself. However, at one or both of the ends 4a and 4b, the container 4 may also be totally closed, wherein for example in the case of totally closed rear end 4b, the nutrient solution SN can be made to flow out through any one of the solutions available to a person skilled in the art, e.g. by means of an overflow and/or a valve or drain tap. Alternatively, the outflow of the solution can be obtained by means of a dedicated pump (not shown in the figures), e.g. a submersed pump.

Additionally, it is worth noting that the word "tubular" means a container whose shape and method of use resemble those of a tube, and so comprehensive of a closed external sleeve of any section (circular, in the case of a cylindrical container, but also square, rectangular or in any case polygonal), and therefore which separates the inside of the container from the outside in any radial direction (with reference to the longitudinal axis of extension and/or of symmetry), with the exceptions of openings provided in said sleeve (see description below). A container 4 of cylindrical type can still be preferred because it facilitates, as in the case of the embodiment depicted in the figures, the arrangement of the container 4 on the tank 3. Furthermore, the cylindrical shape allows making the container 4 using portions of tube or pipe of the type available on the market, and therefore with obvious advantages in terms of low and/or contained costs.

However, it is worth noting that the container 4 must not necessarily be superimposed on the tank 3 but may be arranged in any position near the tank 3, e.g. by the side of the tank 3. However, the solution with the container 4 superimposed on the tank 3 offers clear advantages in terms of reduction of the overall dimensions. In this case, indeed, as depicted in figure 2, the tank 3 can also be shaped so as to simplify the arrangement of the container 4 on the tank 3; for example, as depicted, the tank 3 may be provided with a pair of opposite fins 3a shaped and arranged so as to define a resting cradle for the container 4, the shape of the fins 3a being such as to define a cradle with a shape substantially that of the container 4. For example, if the container 4 is substantially cylindrical, the fins 3a will define a cradle with radial development in a semicircle, wherein on the contrary, in the case of container 4 with square section, the fin may each comprise a portion lying on a plane parallel to a horizontal reference plane.

The gap or minimum distance Dm between the fins 3a will be in any case smaller than the maximum cross dimension DM of the container 4.

In the external sleeve 5 of the container 4, in a position opposite to the portion of the container 4 resting on the tank 3, a plurality of seats (substantially, recesses or notches) 6 are formed, each of a size and shape such to allow the partial insertion of a pot V into the container 4, but in any case such as to support, by contrast of shape and/or size, the pot V itself so that the part of the pot containing (or intended to contain) the roots of the respective plant 2 is arranged inside the container 4, wherein the part 20 of the vegetative development of the plant (substantially trunk and/or branches and/or leaves) is arranged outside the container 4.

For example, in the case of frustoconical pot V, the respective housing 6 may be of substantially circular shape (according to a plan view), with diameter corresponding to that of any intermediate cross-section of the frustoconical portion of the pot.

The supporting method of each of the pots V by contrast of shape and size with the respective seat 6 (essentially with its edge) may be chosen depending on requirements and/or circumstances according to methods substantially known to a person skilled in the art. In the same manner, the seats may have different shapes and sizes to accommodate pots V of correspondingly different shapes and size, wherein both the number of seats 6 (per unit of length) of the container 4 and the distance between two adjacent seats 6 may vary according to requirements and/or circumstances

It is apparent that by using pots V provided with openings 7 (or at least permeable) in the part intended to house the roots (not depicted) of the plant 2, the roots may be wet by means of a fertilizing solution inside the container 4 (according to methods described in detail below), if the roots are confined within the pot V or if the roots develop outside the pot V and extend outside of the pot V through the openings 7.

According to the embodiment depicted in the figures, the system 1 according to the present invention comprises pumping means 8 (e.g. a simple pump 8) for pumping the fertilizing solution from the tank 3 into the container 4 through a first delivery pipe 9. Obviously, although the pump 8 is arranged inside the tank 3 in the figures, according to the present invention the pump 8 can indifferently be positioned outside the tank 3. In the first case, it will be possible to use a submerged pump 8, for example; in the second case, it will be sufficient to provide a connecting pipe from the tank 3 to the pump 8, according to methods substantially known and therefore not described in greater detail for the sake of conciseness.

For example, the pump 8, according to the present invention, may be periodically actuated and/or operated by means of an appropriately programmed timer (not depicted in the figures).

Therefore, as mentioned above, it can be appreciated that, by means of the pump 8, the fertilizing solution can be introduced into the container 4, until it reaches a maximum level (adjustable according to the methods described below) but in any case such that the solution wets the roots of the plants 2.

The maximum level of the solution in the container 4, within the scope of the present invention, can be adjusted and/or predetermined according to different needs and/or circumstances, in particular depending on the cultivation method to be implemented.

For example, the solution can be made to flow from the container 4 and reintroduced into the tank 3 simply by gravity through an overflow device 10 connected to the tank 3 by means of a draining pipe 11. Alternatively, the overflow 10 may be of the automatic type and comprises a level sensor (e.g. optical) or even a simple float, and in this case the solution may be removed from the container 4 and (possibly) reintroduced into the tank 3 by means of a second draining pump (not depicted), e.g. a submersed pump either activated or operated by means of said sensor or said float.

The embodiment of the system of the present invention depicted in Figure 1 also comprises a draining device 12, such as for example a plug or a barrier, positioned at the bottom of the container 4 or to a height of the container 4 substantially just above the bottom of the container 4 itself. Opening of the emptying device 12, results in the part of the nutrient solution present in the lower part of the container 4 and not evacuated and/or evacuable according to the other methods summarized above being removed to obtain a complete emptying of the container 4. Said solution is particularly useful if the container 4 is to be washed, e.g. in case of a change of destination of use (e.g. in case the fertilizing solution previously used is not compatible with the successive cultivation cycle).

The drain 12 may be connected to the tank 3 or not by means of a further draining pipe 13.

A possible method of use of the system depicted in the figures and described above may be summarized as follows.

By means of the pump 8 (or equivalent means, possibly even manual means), the fertilizing solution is introduced into the container 3 until the solution in the container 3, reaches a level so as to wet the roots of the plants 2 (so that the roots are at least partially submerged). The introduction of the solution may be either continuous or intermittent. In the case of continuous introduction, upon reaching the predetermined level, the solution starts being removed in a quantity corresponding to that introduced (the volume of the solution drained from the container 4 corresponds to that introduced into the container 4 in the unit of time). In the case of intermittent introduction, upon reaching the desired level, the introduction is suspended and the draining starts after a determined time starting from the suspension of the introduction. The draining, when desired, can both be concomitant with a new introduction or, alternatively, the introduction can start again when a minimum level is reached in the container 4.

The system can therefore be used in either continuous flow mode or in intermittent flow mode according to the cultivation methods of the prior art.

It has thus been demonstrated by means of the above detailed description of the embodiments of the present invention as depicted in the drawings that the present invention allows achieving the intended objects, and in particular that of bringing together the advantages offered by the known systems for the cultivation in pots and in trays in a single system, whereby overcoming the respective drawbacks.

Although the present invention is explained above by means of a detailed description of the embodiments thereof depicted in the drawings the present invention is not obviously limited to the embodiments described above and depicted on the drawings.

For example, as depicted, the system can further comprise an air pump 14 to allow the aeration of the fertilizing solution within said container (and therefore the oxygenation of the root system 7 of the plants 2). The air pump 14 is positioned on the outside of the container 4 at a portion of its external surface; by means of the air pipe 15, the air introduced by the air pump 14 passes through an appropriate hole formed on the surface of the container 4 and allows the insertion into the container 4 of the oxygen necessary for the growth of the plants 2.

Furthermore, according to an embodiment (not depicted in the figures), the system 1 of the present invention may comprise a protective bag made of flexible material and opaque to light, in this case the container 4 being housed in the bag.

The bag has the function of protecting the nutrient solution and the roots from light, whereby avoiding the formation of algae and/or similar biological formations precisely promoted by exposure to light.

The bag is therefore particularly useful in cases where the container 4 is made of transparent material and can therefore be equipped to allow the intermittent exposure to light of the nutrient solution and/or of the roots. For example, for this purpose, the bag may comprise one or more alternatively openable and reclosable windows; alternatively, a simple hinge between flaps and/or opposite edges of the bag, may indeed allow the mutual spacing of said flaps and/or opposite edges (and so the creation of a window or opening for the passage of the light) and the approaching of said edges and/or flaps, with the opposite result of blocking the passage of light.

Additionally, the periodic opening of the bag (of the hinge and/or of one or more windows), allows monitoring and/or evaluating with the same frequency the state of health and/or development of the plant roots.

Furthermore, although the container 4 has a substantially rectilinear longitudinal development (with cross section as desired) in the embodiment of the present invention as depicted in the figures, embodiments in which the container 4 does not necessarily have rectilinear development (between the opposite end portions 4a and 4p), e.g. serpentine-shaped (according to a plan view) and including at least two elbows with opposite curvature, fall within the scope of the present invention.

The present invention also allows the widest choice of materials for making the components of the system. For example, the container 4 may be advantageously made of plastic material (at least the external sleeve), e.g. opaque or transparent neoprene.

Consequently, the scope of protection of the present invention cannot be limited to the particular embodiments described above only and depicted by way of example and must be considered as defined by the claims attached thereto.

## Claims

1. A system (1) for the cultivation, in particular hydroponic, of plants (2), in particular herbaceous plants, said system (1) comprising:
- a tank (3) adapted to contain a fertilizing and/or nutrient solution for the plants (2);
- a tubular container (4) delimited by a substantially closed external sleeve, in fluid communication with said tank (3) by means of at least a first delivery pipe (9) and adapted to contain therein a predefined quantity of said nutrient solution;
- introduction means (8, 9) for introducing said fertilizing and/or nutrient solution from said tank (3) into said container (4);
- at least one pot (V) adapted to house therein at least the root system (7) of at least one plant (2);
wherein at least one opening or seat (6) is obtained in the external sleeve (5) of said container (4), adapted to accommodate and support, by contrast of shape and/or size, said at least one pot (V) so that the portion of said pot (V) intended to accommodate the root system (7) of said at least one plant (2) is positioned inside said container (4) in contact with said nutrient solution, and so that the vegetative apparatus (20) of said at least one plant can develop outwards from said container (4),
**characterized in that** said container (4) is positioned above said tank (3) resting on said tank (3).

2. A system according to claim 1, **characterized in that** said tank (3) defines a supporting cradle on which said tubular container (3) is positioned to rest.

3. A system according to claim 2, **characterized in that** said resting cradle comprises two opposite supporting fins (3a), wherein the minimum mutual distance between said opposite supporting fins (3a) is smaller than the maximum crosswise dimension of said tubular container (3).

4. A system according to claim 1, **characterized in that** said tubular container (4) extends between a first end portion (4a) and a second end portion (4p) opposite to said first end portion (4a), **and in that** said tank (3) is shaped so that said tubular container (4) is arranged at least slightly inclined with respect to a horizontal reference surface sloping towards either said first end portion (4a) or said second end portion (4p).

5. A system according to claim 2, **characterized in that** said system further comprises draining means (10) for draining said nutrient solution from said container (3).

6. A system according to claim 5, **characterized in that** said draining means (10) comprise reintroduction means (11) for reintroducing into said tank (3) said nutrient solution drained from said tubular container (3) by means of said draining means (10).

7. A system (1) according to one of claims from 1 to 6, wherein a plurality of said openings or seats (6) is obtained in the external sleeve (5) of said container (4), arranged in succession along a direction substantially parallel to the longitudinal development direction of said tubular container (4).

8. A system (1) according to any one of the preceding claims, wherein said container (4) is substantially cylindrical with substantially circular cross-section.

9. A system (1) according to any one of the preceding claims, wherein said introduction means (8) comprise pumping means (8) and at least one delivery pipe (9) for pumping said fertilizing solution from said tank (3) into said container (4) by means of said first delivery pipe (9).

10. A system (1) according to claim 9, which further comprises a timer for programming the pumping cycles of said pumping means (8).

11. A system (1) according to any one of the preceding claims, which further comprises an air pump (14) for introducing air into said container (4) so as to allow the aeration of said fertilizing solution inside said container (4).

12. A system (1) according to any one of the preceding claims, wherein said container (4) is further provided with a device (10) for adjusting the level of nutrient solution inside said container (4).

13. A system according to claim 12, wherein said draining means (10) comprise an overflow device (10) adapted to define the maximum level of said nutrient solution in said container (4) **and wherein** said overflow device (10) is positioned at the end portion between said first end portion (4a) and said second end portion (4p) closest to said horizontal reference surface.

14. An irrigation system according to any one of the preceding claims, wherein said container (4) is further provided with an emptying device (12) of the container (4) **and wherein** said emptying device (12) is positioned at the end portion between said first end portion (4a) and said second end portion (4p) closest to said horizontal reference surface.

15. A system according to claim 14, wherein said emptying device (12) comprises second reintroduction means (13) for reintroducing into said tank (3) the nutrient solution let out from said container (4) through said emptying device (12).
